# EUROPÄISCHE PATENTANMELDUNG

(11) **EP 4 711 073 A2**
(43) Veröffentlichungstag der Anmeldung: **18.03.2026**
(21) Anmeldenummer: 25196467.2
(22) Anmeldetag: 18.08.2025
(51) Int. Cl.: B23K 26/38

(54) **VERFAHREN ZUM HERSTELLEN MEHRERER WERKSTÜCKE SOWIE LASERSCHNEIDSYSTEM**

(30) Priorität: 13.09.2024 DE 102024126475
(71) Anmelder: TRUMPF Werkzeugmaschinen SE + Co. KG, 71254 Ditzingen (DE)
(72) Erfinder: KRAUS, Christoph, 71272 Renningen (DE); MACH, Patrick, 71404 Korb (DE)
(74) Vertreter: Trumpf Patentabteilung

(57) **Zusammenfassung**

Verfahren zum Herstellen mehrerer Werkstücke (14) aus einem Rohling (10), von welchen zumindest eines eine Teilfase (16) aufweist, wobei bei dem Verfahren die mehreren Werkstücke (14) in Ihrer Anordnung relativ zueinander auf dem Rohling (10) derart geplant werden, dass diese an ihren einander zugewandten Seiten höchstens eine Schnittspaltbreite voneinander entfernt sind, und wobei für das Herstellen der Werkstücke (14) beide Werkstücke (14) mittels eines einzigen Trennschnitts (18) an den einander zugewandten Seiten mittels eines Laserstrahls aus dem Rohling (10) ausgeschnitten werden, wobei bei unveränderter Relativposition der Werkstücke (14) zueinander mittels wenigstens eines Fasenschnitts (20) an wenigstens eines der Werkstücke (14) wenigstens eine Teilfase (16) an die dem anderen der beiden Werkstücke (14) zugewandte Seite geschnitten wird.

## Beschreibung

Die Erfindung betrifft ein Verfahren zum Herstellen mehrerer Werkstücke sowie ein Laserschneidsystem.

Sind mehrere Werkstücke, von welchen wenigstens eines mit einer Fase oder einer Teilfase herzustellen sind, aus einem einzigen Rohling auszuschneiden, dann kann es hierbei zu Fehlverschnitt und infolgedessen zu viel Ausschuss kommen.

Aufgabe der vorliegenden Erfindung ist es, eine Lösung zu schaffen, mittels welcher mehrere Werkstücke aus einem Rohling hergestellt werden können, wobei beim Schneiden entstehender Verschnitt besonders gering gehalten wird.

Die Aufgabe wird erfindungsgemäß durch die Gegenstände der unabhängigen Ansprüche gelöst. Weitere mögliche Ausgestaltungen der Erfindung sind in den Unteransprüchen, der Beschreibung und der Zeichnung angegeben. Merkmale, Vorteile und mögliche Ausgestaltungen, die im Rahmen der Beschreibung für einen der Gegenstände der unabhängigen Ansprüche dargelegt sind, sind zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Die Erfindung betrifft ein Verfahren zum Herstellen mehrerer Werkstücke aus einem Rohling. Insbesondere handelt es sich bei den jeweiligen Werkstücken um plattenförmige Werkstücke. Diese Werkstücke können insbesondere aus einem metallischen Werkstoff herzustellen sein. Von diesen herzustellenden mehreren Werkstücken ist zumindest eines mit einer Teilfase herzustellen. Bei dem Verfahren ist es vorgesehen, dass die mehreren herzustellenden Werkstücke in ihrer Anordnung relativ zueinander auf dem Rohling derart geplant werden, dass diese an ihren einander zugewandten Seiten höchstens eine Schnittspaltbreite voneinander entfernt sind. Es können somit im Rahmen einer Planung für das Herstellen der Werkstücke jeweilige mittels eines Laserstrahls einer Laserschneidanlage abzufahrenden Schneidkonturen auf einer Oberfläche des Rohlings, auf welche beim Laserschneiden der Laserstrahl ausgerichtet wird, derart angeordnet werden, dass wenigstens zwei der durch das Schneiden des Rohlings herzustellenden Werkstücke höchstens die Schnittspaltbreite voneinander entfernt sind. Der Schnittspalt ist derjenige Spalt, welcher sich beim Laserschneiden infolge des Ausrichtens des Laserstrahls auf der Oberfläche des Rohlings im Rohling ergibt. Eine Breite des Schnittspalts entspricht zumindest im Wesentlichen einem Bearbeitungsquerschnitt des für das Schneiden genutzten Laserstrahls auf der Oberfläche des Rohlings. Mit anderen Worten entspricht die Schnittspaltbreite zumindest im Wesentlichen der parallel zur Schnittspaltbreite verlaufenden Breite des Bearbeitungsquerschnitts des Laserstrahls, wobei es sich bei dem Bearbeitungsquerschnitt um den Querschnitt des Laserstrahls handelt, welcher sich in einer durch die Oberfläche des Rohlings, auf welche der Laserstrahls ausgerichtet wird, aufgespannten Ebene ergibt.

Bei dem Verfahren ist es weiterhin vorgesehen, dass für das Herstellen der Werkstücke zwei Werkstücke mittels eines einzigen Trennschnitts an den einander zugewandten Seiten mittels des Laserstrahls aus dem Rohling ausgeschnitten werden. Dadurch, dass die Anordnung der für das Herstellen der Werkstücke nachzuschneidenden Schneidkonturen auf dem Rohling derart gewählt wird, dass die einander zugewandten Seiten von wenigstens zwei Werkstücken höchstens die Schnittspaltbreite voneinander entfernt sind, ist es möglich, dass diese beiden Werkstücke an diesen einander zugewandten Seiten mittels eines einzigen Trennschnitts voneinander getrennt werden können.

Bei dem Verfahren ist es weiterhin vorgesehen, dass bei unveränderter Relativposition der Werkstücke zueinander mittels eines Fasenschnitts an wenigstens eines der Werkstücke wenigstens eine Teilfase an die dem anderen der beiden Werkstück zugewandte geschnitten wird. Für das Herstellen der Teilfase kann der Laserstrahl um einen Winkel von bis zu 60 Grad zu einer auf der Oberfläche des Rohlings senkrecht angeordneten Achse verschwenkt sein, insbesondere um eine parallel zur Schneidrichtung verlaufende Achse. Beispielsweise können die Werkstücke nach dem Durchführen des Trennschnitts weiterhin über ein Restgitter des Rohlings in ihrer Relativposition zueinander gehalten werden, während mittels des Fasenschnitts wenigstens eines der Werkstücke an der beim Trennschnitt entstandenen Seite mit der Teilfase versehen werden kann. Eine senkrecht zur Oberfläche des Rohlings, auf welche zum Schneiden der Teilfase der Laserstrahl ausgerichtet worden ist, verlaufende Höhe der Teilfase ist somit geringer als eine parallel zur Höhe der Fase verlaufende Dicke des Rohlings beziehungsweise der jeweiligen Werkstücke. Durch geschicktes besonders nahes Aneinanderlegen jeweiliger zum Herstellen der Werkstücke zu schneidender Schneidkonturen können somit im Rahmen des Verfahrens mehrere Werkstücke besonders einfach hergestellt werden, wobei wenigstens eines der Werkstücke mit einer Teilfase hergestellt wird und besonders wenig Verschnitt des Rohlings entsteht. Das Verfahren ermöglicht somit ein besonders materialsparendes Herstellen mehrerer Werkstücke aus einem einzigen Rohling, wobei wenigstens eines der Werkstücke eine Teilfase aufweist.

In einer möglichen Weiterbildung der Erfindung ist es vorgesehen, dass mittels eines einzigen Fasenschnitts an jedes der mittels des Trennschnitts voneinander getrennten Werkstücke jeweils eine Teilfase geschnitten wird. Hierfür kann der Laserstrahl beim Fasenschnitt im Vergleich zu seiner Ausrichtung beim Trennschnitt um die parallel zur Schneidrichtung des Laserstrahls beim Trennschnitt verlaufende Achse verschwenkt ausgerichtet sein. Mittels des Laserstrahls kann bei dem Fasenschnitt gleichzeitig an eine Oberkante eines ersten der mittels des Trennschnitts voneinander getrennten Werkstücke und an eine Unterkante des zweiten mittels des Trennschnitts voneinander getrennten Werkstücke angebracht werden. Dabei ist die Oberkante des ersten Werkstücks auf einer dem Laserstrahl zugewandten ersten Seite des Rohlings angeordnet und die Unterkante an einer der ersten Seite des Rohlings gegenüberliegenden, dem Laserstrahl abgewandten zweiten Seite des Rohlings angeordnet. Es können somit im Rahmen des Verfahrens besonders schnell zumindest die beiden Werkstücke mit besonders wenigen durchzuführenden Schnitten jeweils mit wenigstens einer Teilfase hergestellt werden.

In einer weiteren möglichen Ausgestaltung der Erfindung ist es vorgesehen, dass die Werkstücke an ihren einander zugewandten Seiten nach dem Trennen der Werkstücke durch zwei separate Fasenschnitte mit Teilfasen versehen werden, insbesondere Teilfasen unterschiedlicher Breite und/oder unterschiedlicher Tiefe und/oder unterschiedlichem Fasenwinkel. Der Fasenwinkel charakterisiert den Winkel, welchen die beim Fasenschnitt entstehende schräge Schnittfläche des Werkstücks mit einer durch eine ursprüngliche Oberfläche des Rohlings aufgespannten Ebene einschließt. Die Breite der jeweiligen Fase charakterisiert den entlang der ursprünglichen Oberfläche des Rohlings verlaufenden Abstand von der ursprünglichen Oberkante beziehungsweise Unterkante des Werkstücks bis zu der nach dem Fasenschnitt entstandenen neuen Oberkante beziehungsweise Unterkante des Werkstücks. Die Tiefe der Fase beschreibt, wie weit sich die Fase in Dickenrichtung des Werkstücks erstreckt, wobei die Dickenrichtung senkrecht zu der Oberfläche des Rohlings verläuft, auf welche für das Durchführen des Trennschnitts beziehungsweise des Fasenschnitts der Laserstrahl ausgerichtet worden ist. Mit anderen Worten können die beiden mittels eines einzigen Trennschnitts voneinander getrennten, aus dem Rohling ausgeschnittenen Werkstücke mit Fasen zueinander unterschiedlicher Breite und/oder Tiefe und/oder Fasenwinkel versehen werden, indem zwei separate Fasenschnitte vorgenommen werden. Es können somit unterschiedlich zueinander ausgestaltete Werkstücke besonders einfach aus dem Rohling ausgeschnitten werden.

In einer weiteren möglichen Ausgestaltung der Erfindung ist es vorgesehen, dass die jeweiligen Werkstücke als Gleichteile hergestellt werden. Das bedeutet, dass die jeweiligen Werkstücke eine zueinander gleiche Geometrie aufweisen. Hierbei ist es vorgesehen, dass zumindest die beiden mittels eines einzigen Trennschnitts voneinander zu trennenden Werkstücke als Gleichteile ausgestaltet sind. Hierdurch kann durch geschickte Anordnung der geplanten, aus dem Rohling auszuschneidenden Werkstücke erreicht werden, dass die mittels des Trennschnitts voneinander getrennten Werkstücke gleichzeitig mittels des einen weiteren Fasenschnitts jeweils mit einer Teilfase versehen werden können. Hierdurch kann erreicht werden, dass die Werkstücke mit besonders wenigen Schnitten aus dem Rohling ausgeschnitten werden können und darüber hinaus besonders wenig Verschnitt beim Herstellen der Werkstücke entsteht.

In diesem Zusammenhang kann es insbesondere vorgesehen sein, dass die gleichteiligen Werkstücke in ihrer Ausrichtung zueinander auf dem Rohling um eine Raumachse gedreht zueinander ausgerichtet sind. Durch das Drehen der geplanten Ausrichtung der Werkstücke auf beziehungsweise in dem Rohling um zumindest eine Raumachse zueinander kann erreicht werden, dass die Werkstücke derart zueinander ausgerichtet sind, dass zueinander kongruente Kanten beziehungsweise Fasen der Werkstücke mit besonders wenigen Schnitten geschnitten werden können. Mit anderen Worten wird eines der Werkstücke relativ zu dem anderen Werkstück derart gedreht und ausgerichtet, dass die Werkstücke mittels eines einzigen Trennschnitts an den einander zugewandten Seiten voneinander getrennt werden können und mittels eines einzigen Fasenschnitts an den einander zugewandten Seiten der Werkstücke die Werkstücke jeweils mit einer Teilfase versehen werden können, wobei diese Teilfasen eine zueinander gleiche Breite und zueinander gleiche Tiefe und einen zueinander gleichen Fasenwinkel aufweisen. Es wird somit ermöglicht, dass mehrere als Gleichteile ausgebildete Werkstücke besonders einfach und schnell aus dem Rohling mit besonders wenig Verschnitt hergestellt werden können.

In einer weiteren möglichen Ausgestaltung der Erfindung ist es vorgesehen, dass bei dem Verfahren symmetrisch ausgestaltete Werkstücke hergestellt werden. Beispielsweise können die jeweiligen Werkstücke an ihren jeweiligen Breitseiten die Form eines gleichschenkligen Trapezes aufweisen. Weist eines der aus dem Rohling ausgeschnittenen Werkstücke mehrere Teilfasen auf, welche an der gleichen Seite des Werkstücks angeordnet sind, dann können diese Teilfasen, um eine Symmetrie des Werkstücks zu ermöglichen, eine zueinander gleiche Höhe sowie Tiefe sowie einen zueinander gleichen Fasenwinkel aufweisen. Insbesondere können diese Teilfasen an einander gegenüberliegenden Schmalseiten des Werkstücks angeordnet sein. Die symmetrische Ausgestaltung der aus dem Rohling auszuschneidenden Werkstücke ermöglicht es, dass mit besonders hoher Wahrscheinlichkeit wenigstens zwei der Werkstücke derart relativ zueinander in dem Rohling geplant werden können, dass an diesen Werkstücken zu schneidende Teilfasen mittels eines einzigen Fasenschnitts geschnitten werden können. Hierdurch ist ein besonders schnelles Herstellen der mehreren Werkstücke mit besonders wenig Verschnitt aus dem Rohling möglich.

In einer weiteren möglichen Ausgestaltung der Erfindung ist es vorgesehen, dass wenigstens eines der Werkstücke mit einer Y-Fase oder einer Doppel-Y-Fase oder einer Doppel-V-Fase als Teilfase hergestellt wird. Dieses Werkstück kann somit über eine DV-Naht oder über eine DHV-Naht oder über eine Y-Naht oder über eine DY-Naht oder über eine HY-Naht oder über eine DHY-Naht mit einer weiteren Komponente verschweißt werden. Hierdurch kann das Werkstück besonders einfach und sicher mit der Komponente verbunden werden.

In einer weiteren möglichen Ausgestaltung der Erfindung ist es vorgesehen, dass der Rohling plattenförmig ausgestaltet ist und die Werkstücke mittels des einzigen Trennschnitts an ihren einander zugewandten Seiten getrennt werden, welche sich über eine Länge von wenigstens 20 Prozent, insbesondere über eine Länge von wenigstens 25 Prozent eines Umfangs des jeweiligen Werkstücks erstrecken, wobei der Umfang des Werkstücks vollständig innerhalb durch die Oberfläche des Rohlings aufgespannten Ebene verläuft, auf welche für das Durchführen des Trennschnitts der Laserstrahl ausgerichtet wird. Je größer der Anteil des Umfangs des jeweiligen Werkstücks ist, welcher mittels des Trennschnitts geschnitten werden kann, im Rahmen von welchem das Werkstück von dem weiteren Werkstück getrennt wird, desto schneller können die mehreren Werkstücke aus dem Rohling ausgeschnitten werden, da mittels eines einzigen Trennschnitts besonders große Bereiche von zwei unmittelbar zueinander benachbarten Werkstücken ausgeschnitten werden können.

Die Erfindung betrifft des Weiteren ein Laserschneidsystem, mit einer elektronischen Recheneinrichtung sowie mit einem Laserschneidkopf. Der Laserschneidkopf ist dazu eingerichtet, einen Laserstrahl auf einen Rohling auszurichten, wodurch der Rohling mittels des Laserstrahls geschnitten werden kann. Die elektronische Recheneinrichtung ist dazu eingerichtet, eine Anordnung mehrerer herzustellender Werkstücke relativ zueinander auf dem Rohling zu planen, indem wenigstens zwei Werkstücke derart relativ zueinander angeordnet werden, dass diese an ihren einander zugewandten Seiten höchstens eine Schnittspaltbreite voneinander entfernt sind. Der Laserschneidkopf ist dazu eingerichtet, für das Herstellen der Werkstücke beide Werkstücke an ihrer geplanten Anordnung auf dem Rohling durch Ausrichten des Laserstrahls auf die Oberfläche des Rohlings mittels eines einzigen Trennschnitts an den einander zugewandten Seiten auszuschneiden. Weiterhin ist der Laserschneidkopf dazu eingerichtet, bei unveränderter Relativposition der Werkstücke zueinander mittels wenigstens eines Fasenschnitts an wenigstens eines der Werkstücke wenigstens eine Teilfase an die dem anderen der beiden Werkstücke zugewandte Seite zu schneiden. Das Laserschneidsystem ist somit insbesondere dazu eingerichtet, ein Verfahren, wie es bereits im Zusammenhang mit dem erfindungsgemäßen Verfahren beschrieben worden ist, durchzuführen. Infolgedessen ermöglicht das Laserschneidsystem ein besonders schnelles Schneiden mehrerer Werkstücke aus einem Rohling mit besonders wenig Verschnitt.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Schnittansicht eines Ausschnitts eines Rohlings, welcher mit mehreren Laserschnitten einer ersten Art in mehrere Werkstücke unterteilt ist;
- Fig. 2: eine schematische Schnittansicht des Ausschnitts des Rohlings, welcher mit mehreren Laserschnitten einer zweiten Art in mehrere Werkstücke unterteilt ist;
- Fig. 3: eine schematische Schnittansicht des Ausschnitts des Rohlings, welcher mit mehreren Laserschnitten einer dritten Art in mehrere Werkstücke unterteilt ist;
- Fig. 4: eine schematische Schnittansicht des Rohlings, welcher mit mehreren Laserschnitten einer vierten Art in mehrere Werkstücke unterteilt ist;
- Fig. 5: eine weitere schematische Schnittansicht des Ausschnitts des Rohlings, welcher mit mehreren Laserschnitten einer fünften Art in mehrere Werkstücke unterteilt ist; und
- Fig. 6a bis 6f: jeweilige Normalprojektionen in europäischer Darstellung von unterschiedlichen Ausführungsformen an Werkstücken, welche aus dem Rohling ausgeschnitten worden sind.

Gleiche oder funktionsgleiche Elemente sind in den Figuren mit den gleichen Bezugszeichen versehen.

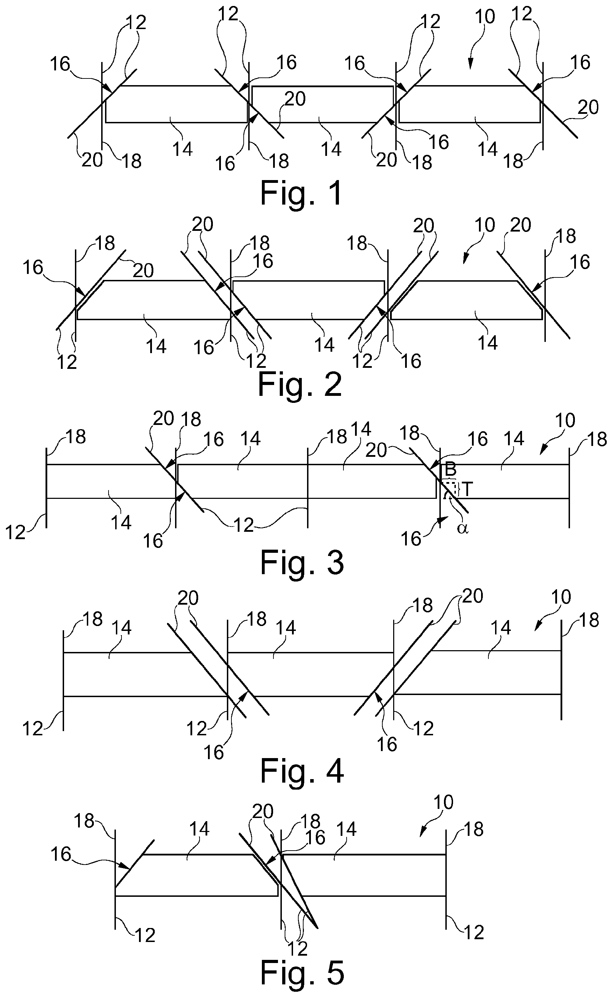

In den Fig. 1 bis 5 ist jeweils ein Rohling 10 ausschnittsweise gezeigt, welcher durch Setzen mehrerer, mittels eines Laserstrahls durchgeführter Schnitte 12 in mehrere Werkstücke 14 unterteilt ist. Hierbei sind in den Fig. 1 bis 5 jeweils zueinander unterschiedliche Schnitte 12 gesetzt worden. Die jeweiligen Werkstücke 14 können mittels eines Laserschneidsystems aus dem Rohling 10 ausgeschnitten worden sein. Das Laserschneidsystem umfasst eine elektronische Recheneinrichtung sowie einen Laserschneidkopf. Die elektronische Recheneinrichtung ist dazu eingerichtet, eine Anordnung der mehreren herzustellenden Werkstücke 14 relativ zueinander in beziehungsweise auf dem Rohling 10 zu planen. Beim Planen können die mehreren zu fertigenden Werkstücke 14 virtuell relativ zueinander in einem virtuellen Modell des Rohlings 10 angeordnet werden, um zu erreichen, dass aus dem Rohling 10 besonders viele Werkstücke 14 mit besonders wenig Verschnitt ausgeschnitten werden können. Hierfür ist es vorgesehen, dass wenigstens zwei der Werkstücke 14 bei der Planung derart relativ zueinander angeordnet werden, dass diese an ihren einander zugewandten Seiten in einer parallel zu einer Oberfläche des Rohlings 10, auf welche beim Schneiden der Laserstrahl ausgerichtet wird, verlaufenden Richtung höchstens eine Schnittspaltbreite voneinander entfernt sind. Diese Schnittspaltbreite entspricht der Breite des Schnittspalts, welcher sich beim Laserschneiden des Rohlings 10 im Rohling 10 ergibt. Dadurch, dass die Werkstücke 14 bezüglich ihrer Anordnung derart relativ zueinander im Rohling 10 geplant werden, dass diese höchstens die Schnittspaltbreite voneinander entfernt sind, können diese Werkstücke 14 mittels des Laserschneidkopfs mit einem einzigen Trennschnitt 18 an den einander zugewandten Seiten getrennt werden. Der Laserschneidkopf des Laserschneidsystems ist somit dazu eingerichtet, für das Herstellen der Werkstücke 14 beide Werkstücke 14 an ihrer geplanten Anordnung in dem Rohling 10 mittels eines einzigen Trennschnitts 18 durch Ausrichten des Laserstrahls auf die Oberfläche des Rohlings 10 an den einander zugewandten Seiten auszuschneiden.

Nachdem diese beiden Werkstücke 14 mittels des Trennschnitts 18 voneinander getrennt worden sind, kann mittels des Laserschneidkopfs bei unveränderter Relativposition der Werkstücke 14 zueinander mittels wenigstens eines Fasenschnitts wenigstens eines der Werkstücke 14 an dessen dem anderen Werkstück 14 zugewandten Seite mit einer Teilfase 16 versehen werden. Dabei ist es möglich, dass an beide Werkstücke 14 an die jeweilige dem anderen der Werkstücke 14 zugewandte Seite jeweils eine Teilfase 16 geschnitten wird, insbesondere mittels eines einzigen Fasenschnitts, wie in Fig. 1 und in Fig. 3 besonders gut erkannt werden kann.

Bei der in Fig. 1 gezeigten Darstellung weisen sämtliche der aus dem Rohling 10 geschnittenen Werkstücke 14 an zwei ihrer einander gegenüberliegenden Schmalseiten jeweils eine Teilfase 16 auf. Insbesondere sind die in Fig. 1 gezeigten, aus dem Rohling 10 geschnittenen, Werkstücke 14 in ihrem Querschnitt achssymmetrisch ausgebildet. Bei den in Fig. 3 gezeigten, aus dem Rohling 10 ausgeschnittenen Werkstücken 14 weisen die jeweiligen Werkstücke 14 lediglich einseitig die Teilfase 16 auf. An ihrer der die Teilfase 16 aufweisenden Seite gegenüberliegenden Seite weisen die jeweiligen Werkstücke 14 keine Fase auf bei der in Fig. 3 gezeigten Darstellung.

Wie in den Fig. 1 bis 3 erkannt werden kann, können sämtliche Werkstücke 14, welche aus dem Rohling 10 ausgeschnitten werden, als Gleichteile hergestellt werden. Hierbei können die Werkstücke 14 in ihrer Ausrichtung zueinander auf dem Rohling 10 um eine Raumachse gedreht zueinander ausgerichtet sein. Vorliegend sind jeweilige erste Werkstücke 14 bei den in Fig. 1 bis Fig. 3 gezeigten Darstellungen um eine in die Bildebene hinein verlaufende Achse um 180 Grad zu jeweiligen zweiten Werkstücken 14 gedreht angeordnet. Hierbei ist jeweils ein erstes Werkstück 14 unmittelbar benachbart zu einem zweiten Werkstück 14 angeordnet, sodass das erste Werkstück 14 und das zweite Werkstück 14 an ihren einander zugewandten Seiten höchstens die Schnittspaltbreite zueinander beabstandet in dem Rohling 10 geplant sind. Die in die Bildebene hinein verlaufende Achse verläuft parallel zu der durch die Oberfläche des Rohlings 10, auf welche für das Ausführen der jeweiligen Schnitte 12 des Laserstrahls ausgerichtet ist, aufgespannten Ebene und senkrecht zu einer Beabstandungsrichtung, in welcher das erste Werkstück 14 und das zweite Werkstück 14 die Schnittspaltbreite voneinander beabstandet sind.

Aus Übersichtlichkeitsgründen ist lediglich in Fig. 3 schematisch für eine der Teilfasen 16 gezeigt, in welcher Richtung die Breite B, in welcher Richtung die Tiefe T und wo der Fasenwinkel α einer jeweiligen Teilfase 16 verlaufen. Weiterhin sind aus Übersichtlichkeitsgründen lediglich einzelne der Teilfasen 16 in den Figuren mit dem zugehörigen Bezugszeichen versehen.

Bei den in den Fig. 2, 4 und 5 gezeigten Abbildungen werden jeweils zwei der Werkstücke 14 mittels eines Trennschnitts 18 an ihren einander zugewandten Seiten mittels des Laserstrahls getrennt und anschließend beide Werkstücke 14 an ihren einander zugewandten Seiten nach dem Trennen mittels zwei separater Fasenschnitte 20 mit jeweiligen Teilfasen 16 versehen. Es ist möglich, dass mittels der zwei separaten Fasenschnitte 20 die unmittelbar zueinander benachbarten Werkstücke 14 an ihren einander zugewandten Seiten jeweils mit einer Teilfase 16 versehen werden, wobei sich diese Teilfasen 16 hinsichtlich Breite B und/oder Tiefe T und/oder Fasenwinkel α unterscheiden.

Bei den in den Fig. 4 und 5 gezeigten Darstellungen ist es vorgesehen, dass zumindest eines der Werkstücke 14 mit wenigstens einer Teilfase 16 versehen wird. Weitere Werkstücke 14 können mit Vollfasen oder ohne Fasen versehen werden. Die separat zueinander durchgeführten Fasenschnitte 20 können mit parallel zueinander verlaufenden Führungen des Laserstrahls, wie in Fig. 4 gezeigt ist, oder mit schräg zueinander verlaufenden Führungen des Laserstrahls, wie in Fig. 5 gezeigt ist, durchgeführt werden. Es können somit, wie in den Fig. 4 und 5 gezeigt ist, als Werkstücke 14 unterschiedliche Teile mit unterschiedlichen Fasen aus dem Rohling 10 gefertigt werden, wobei jeweils zwei der Werkstücke 14 mittels eines gemeinsamen Trennschnitts 18 voneinander getrennt werden.

In den Fig. 1 bis 5 sind jeweilige Werkstücke 14 gezeigt, welche aus dem Rohling 10 ausgeschnitten werden, wobei an einzelnen oder sämtlichen der Werkstücke 14 wenigstens eine Teilfase 16 in Y-Form angebracht ist. Es ist möglich, dass an wenigstens eines der Werkstücke 14 eine Teilfase 16 in Doppel-Y-Form angebracht wird.

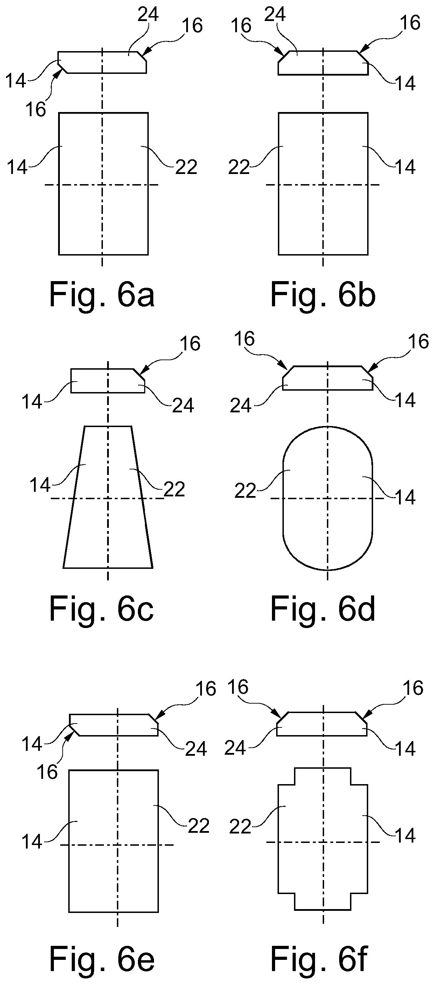

In den Fig. 6a bis 6f sind jeweilige im Rahmen des Verfahrens hergestellte Werkstücke 14 in jeweiligen Normalprojektionen in einer Draufsicht sowie in einer in der jeweiligen Fig. darüber angeordneten Seitenansicht gezeigt. In den jeweiligen Draufsichten der Werkstücke 14 sind somit jeweilige Breitseiten 22 der Werkstücke 14 gezeigt, wobei in den jeweiligen über den jeweiligen Breitseiten 22 dargestellten Seitenansichten jeweilige Schmalseiten 24 der Werkstücke 14 dargestellt sind. Die in den Fig. 6a, 6b und 6e gezeigten Werkstücke 14 weisen jeweilige Breitseiten 22 in Form eines Rechtecks auf. Das in Fig. 6c gezeigte Werkstück 14 weist mit seiner Breitseite 22 die Form eines gleichschenkligen Trapezes auf. Es ist alternativ möglich, dass das Werkstück 14, wie in Fig. 6d gezeigt ist, mit seiner Breitseite 22 die Form eines Rechtecks aufweist, an dessen einander gegenüberliegenden kürzeren Kanten jeweils ein Halbkreis anschließt, dessen Durchmesser einer Länge der jeweiligen kürzeren Kanten des Rechtecks entspricht . Weiterhin ist es alternativ möglich, dass das Werkstück 14 mit seiner Breitseite 22 die Form eines langgezogenen Kreuzes aufweist, wie in Fig. 6f gezeigt ist. Das Werkstück 14 kann, wie in den Fig. 6b, 6d und 6f gezeigt ist, an seinen jeweiligen Schmalseiten 24 eine achssymmetrische Form aufweisen. Somit kann das Werkstück 14 insgesamt achssymmetrisch ausgestaltet sein. Alternativ kann das Werkstück 14 an seinen Schmalseite 24 asymmetrisch ausgestaltet sein, wie in Fig. 6c erkannt werden kann, oder punktsymmetrisch ausgestaltet sein, wie in den Fig. 6a und 6e erkannt werden kann, indem die jeweiligen Teilfasen 16 an einander diagonal gegenüberliegenden Kanten der jeweiligen Schmalseiten 24 angebracht werden.

Insbesondere ist es vorgesehen, dass der Rohling 10 plattenförmig ausgestaltet ist und die jeweiligen unmittelbar zueinander benachbarten, mittels eines einzigen Trennschnitts 18 voneinander zu trennenden Werkstücke 14 an ihren die Breitseite 22 begrenzenden längeren Kante voneinander getrennt werden. Mit anderen Worten können die unmittelbar zueinander benachbarten Werkstücke 14 an ihren einander zugewandten Seiten voneinander getrennt werden, wobei sich der Trennschnitt 18 über eine Länge von wenigstens 20 Prozent, insbesondere über eine Länge von wenigstens 25 Prozent, eines Umfangs der Breitseite 22 des jeweiligen geschnittenen Werkstücks 14 erstreckt. Der Umfang erstreckt sich parallel zu einer durch die Oberfläche des Rohlings 10, auf welche für das Durchführen des Trennschnitts 18 ein Laserstrahl ausgerichtet wird, aufgespannten Ebene. Mit anderen Worten werden die beiden unmittelbar zueinander benachbarten Werkstücke 14 an ihren einander zugewandten, die jeweiligen Breitseiten 22 begrenzenden Längskanten, mittels des Trennschnitts 18 voneinander getrennt. Wie in den jeweiligen Fig. 6a bis 6f erkannt werden kann, können die jeweiligen Werkstücke 14 mit einer achssymmetrischen Breitseite 22 ausgestaltet werden.

Wenn Werkstücke 14 mit Schrägschnittanteil an der Außenkontur ineffizient auf dem Rohling 10 verschachtelt werden, entsteht viel Verschnitt. Bei dem Rohling 10 handelt es sich vorliegend um eine sogenannte Tafel aus einem metallischen Werkstoff. Bei gleichem Volumen des Rohlings 10 ist der prozentuale Verschnitt beim Schneiden von Werkstücken 14 mit Schrägschnittanteil üblicherweise größer als bei Werkstücken 14, die ausschließlich senkrechte Außenkonturen haben, da für das Herstellen jeweiliger Teilfasen 16 weiteres Material abzutrennen ist. Das im Zusammenhang mit den Fig. beschriebene Verfahren zum Herstellen mehrerer Werkstücke 14 aus dem Rohling 10 ermöglicht eine besonders effiziente Materialausnutzung des Rohlings 10. Diese erfolgt insbesondere durch Spiegelung der Ausrichtung geplanter, aus dem Rohling 10 auszuschneidender Werkstücke 14 gleicher Geometrie oder durch Verschachteln ähnlicher geplanter Werkstücke 14 in dem Rohling 10 mit gegensätzlichen Schrägschnittanteilen an ihrer Außenkontur. Die Werkstücke 14 werden dabei so nah in dem Rohling 10 aneinander geplant, dass benachbarte Konturanteile von unmittelbar benachbarten Werkstücken 14 mit einem einzigen gemeinsamen Trennschnitt 18 erzeugt werden können. Die Werkstücke 14 werden insbesondere derart in ihrer Anordnung relativ zueinander an bzw. in dem Rohling 10 geplant, dass auf einer möglichst langen Gesamtlänge die Werkstücke 14 mittels gemeinsamer Trennschnitte 18 geschnitten werden können.

Zusätzlich zu den in den Fig. 1 bis 5 gezeigten Beispielen sind auch andere durch Laserstrahlschneiden erzeugbare Schnittkanten mit Schrägschnittanteil nach vergleichbarem Schema umsetzbar. Beliebige Werkstücke 14 werden jeweils mit gleichen oder möglichst ähnlichen Außenkonturen derart verschachtelt, dass sie lediglich den Abstand des beim Trennschnitt 18 erzeugten Schnittspalts voneinander haben. Schräge Anteile der Schnittkanten können im Winkelbereich von null bis 60 Grad zur Senkrechten auf der Oberfläche des Rohlings 10 liegen, auf welche für das Durchführen der jeweiligen Schnitte 12 der Laserstrahl ausgerichtet wird. Im Rahmen des Verfahrens kann ein Rohling 10 beliebigen Materials und unterschiedlicher Materialdicke, insbesondere einer Materialdicke von mehr als 0 Millimetern bis 200 Millimetern geschnitten werden. Die jeweiligen Schnitte 12 können in einem Brennschnittverfahren oder in einem Schmelzschnittverfahren oder in einem Hybridprozess getätigt werden. Das beschriebene Verfahren ermöglicht eine Materialeinsparung, da aufgrund der besonders nahen Anordnung der Werkstücke 14 in beziehungsweise auf dem Rohling 10 zueinander besonders wenig Verschnitt entsteht, wobei die Materialeinsparung größer ist, je größer eine Dicke des Rohlings 10 und je größer Schnittwinkel der jeweiligen Fasenschnitte 20 zur Senkrechten auf die Oberfläche des Rohlings 10, auf welche für das Durchführen der Schnitte 12 der Laserstrahl ausgerichtet wird, sind. Darüber hinaus ermöglicht das Verfahren eine Einsparung von Prozesszeit, da mit besonders wenigen Trennschnitten 18 die jeweiligen Werkstücke 14 aus dem Rohling 10 ausgeschnitten werden können. Hierdurch kann eine besonders hohe Gesamtenergieeffizienz eines Fertigungsprozesses beim Herstellen der Werkstücke 14 erreicht werden.

### BEZUGSZEICHENLISTE

- 10: Rohling
- 12: Schnitt
- 14: Werkstück
- 16: Teilfase
- 18: Trennschnitt
- 20: Fasenschnitt
- 22: Breitseite
- 24: Schmalseite
- B: Breite
- T: Tiefe
- α: Fasenwinkel

## Patentansprüche

1. Verfahren zum Herstellen mehrerer Werkstücke (14) aus einem Rohling (10), von welchen zumindest eines eine Teilfase (16) aufweist, wobei bei dem Verfahren die mehreren Werkstücke (14) in Ihrer Anordnung relativ zueinander auf dem Rohling (10) derart geplant werden, dass diese an ihren einander zugewandten Seiten höchstens eine Schnittspaltbreite voneinander entfernt sind, und wobei für das Herstellen der Werkstücke (14) beide Werkstücke (14) mittels eines einzigen Trennschnitts (18) an den einander zugewandten Seiten mittels eines Laserstrahls aus dem Rohling (10) ausgeschnitten werden, wobei bei unveränderter Relativposition der Werkstücke (14) zueinander mittels wenigstens eines Fasenschnitts (20) an wenigstens eines der Werkstücke (14) wenigstens eine Teilfase (16) an die dem anderen der beiden Werkstücke (14) zugewandte Seite geschnitten wird.

2. Verfahren nach Anspruch 1,
**dadurch gekennzeichnet, dass**
mittels eines einzigen Fasenschnitts (20) an jedes der mittels des Trennschnitts (18) voneinander getrennten Werkstücke (14) jeweils eine Teilfase (16) geschnitten wird.

3. Verfahren nach Anspruch 1 oder 2,
**dadurch gekennzeichnet, dass**
beide Werkstücke (14) an ihren einander zugewandten Seiten nach dem Trennen der Werkstücke (14) durch zwei separate Fasenschnitte (20) mit Teilfasen (16) versehen werden, insbesondere Teilfasen (16) unterschiedlicher Breite und/oder unterschiedlicher Tiefe und/oder unterschiedlichem Fasenwinkel.

4. Verfahren nach einem der vorhergehenden Ansprüche,
**dadurch gekennzeichnet, dass**
die jeweiligen Werkstücke (14) als Gleichteile hergestellt werden.

5. Verfahren nach Anspruch 4,
**dadurch gekennzeichnet, dass**
die gleichteiligen Werkstücke (14) in ihrer Ausrichtung zueinander auf dem Rohling (10) um eine Raumachse gedreht zueinander ausgerichtet sind.

6. Verfahren nach einem der vorhergehenden Ansprüche,
**dadurch gekennzeichnet, dass**
symmetrisch ausgestaltete Werkstücke (14) hergestellt werden.

7. Verfahren nach einem der vorhergehenden Ansprüche,
**dadurch gekennzeichnet, dass**
wenigstens eines der Werkstücke (14) mit einer Y-Fase oder einer Doppel-Y-Fase als Teilfase (16) hergestellt wird.

8. Verfahren nach einem der vorhergehenden Ansprüche,
**dadurch gekennzeichnet, dass**
der Rohling (10) plattenförmig ausgestaltet ist und die Werkstücke (14) mittels des einzigen Trennschnitts (18) an ihren einander zugewandten Seiten getrennt werden, welche sich über eine Länge von wenigstens 20 Prozent, insbesondere über eine Länge von wenigstens 25 Prozent eines Umfangs des jeweiligen Werkstücks (14) erstrecken, welcher parallel zu einer durch die Oberfläche des Rohlings (10) aufgespannten Ebene verläuft, auf welche für das Durchführen des Trennschnitts (18) der Laserstrahl ausgerichtet wird.

9. Laserschneidsystem, mit einer elektronischen Recheneinrichtung, welche dazu eingerichtet ist, eine Anordnung mehrerer herzustellender Werkstücke (14) relativ zueinander auf einem Rohling (10) zu planen, indem wenigstens zwei Werkstücke (14) derart relativ zueinander angeordnet werden, dass diese an ihren einander zugewandten Seiten höchstens eine Schnittspaltbreite voneinander entfernt sind, und mit einem Laserschneidkopf, welcher dazu eingerichtet ist, für das Herstellen der Werkstücke (14) beide Werkstücke (14) in ihrer geplanten Anordnung auf dem Rohling (10) mittels eines einzigen Trennschnitts (18) an den einander zugewandten Seiten auszuschneiden und bei unveränderter Relativposition der Werkstücke (14) zueinander mittels wenigstens eines Fasenschnitts (20) an wenigstens eines der Werkstücke (14) wenigstens eine Teilfase (16) an die dem anderen der beiden Werkstücke (14) zugewandte Seite zu schneiden.
